Europäisches Patentamt

(19) European Patent Office

Office européen des brevets

(11) Numéro de publication: **0 102 266**
**B1**

(12) **FASCICULE DE BREVET EUROPEEN**

(45) Date de publication du fascicule du brevet: 03.05.89

(51) Int. Cl.⁴: **B 60 K 25/00,** B 28 C 5/42

(21) Numéro de dépôt: 83401502.6

(22) Date de dépôt: 21.07.83

(54) **Appareillage hydraulique pour l'entraînement d'un ou plusieurs appareils hydrauliques d'équipement, montés sur une semi-remorque à partir du système de motorisation de cette semi-remorque.**

(30) Priorité: 28.07.82 FR 8213165

(43) Date de publication de la demande:
07.03.84 Bulletin 84/10

(45) Mention de la délivrance du brevet:
03.05.89 Bulletin 89/18

(84) Etats contractants désignés:
AT BE CH DE GB IT LI NL SE

(56) Documents cités:
BE-A- 691 743
DE-B-1 231 149
FR-A-1 037 271
FR-A-1 247 791
FR-A-2 252 932
FR-A-2 516 873
US-A-2 997 956
US-A-3 209 850

REVUE TECHNIQUE DIESEL, no. 99D, 09/10
1979, page 95, Boulogne, FR; "Semi-remorque
à roues motrices chez Fruehauf"

(73) Titulaire: **Fouquet, Jean-Claude**
**4 Avenue des Alouettes**
**F-91540 Mennecy (FR)**

(72) Inventeur: **Fouquet, Jean-Claude**
**4 Avenue des Alouettes**
**F-91540 Mennecy (FR)**

(74) Mandataire: **Polus, Camille et al**
**c/o Cabinet Lavoix 2, Place d'Estienne d'Orves**
**F-75441 Paris Cedex 09 (FR)**

Courier Press, Leamington Spa, England.

## Description

La présente invention a pour objet un appareillage hydraulique pour l'entraînement d'un élément tel qu'une bétonnière par un système de motorisation de semi-remorque alternativement avec cette dernière, qui est attelée à un tracteur routier et de travaux de chantiers et supporte la bétonnière.

Complémentairement l'invention a aussi pour objet un appareillage hydraulique pour l'entraînement d'un élément constitué par un circuit hydraulique supplémentaire et destiné à l'asservissement par exemple de vérins hydrauliques, foreuses, treuils ou appareils similaires, par le système hydrostatique de motorisation utilisé quand le véhicule est en marche pour entraîner la semi-remorque.

Certains systèmes de motorisation des essieux de semi-remorque comprennent, sur la semi-remorque, un moteur hydraulique flasqué ou non à une boîte de transfert réductrice débrayable, normalement destiné à entraîner un ou plusieurs ponts de la semi-remorque.

L'invention a pour but d'utiliser en totalité ou en partie ce système de motorisation de la semi-remorque pour assurer des fonctions diverses, qui sont normalement effectuées jusqu'à présent à partir du moteur thermique du tracteur, de manière simultanée ou alternée avec l'emploi du système de motorisation.

On peut citer au titre d'art antérieur connu le brevet belge BE—A—691743 qui décrit un tracteur à semi-remorque dans lequel l'essieu arrière de la semi-remorque est utilisé comme dispositif moteur d'appoint.

La demande de brevet allemand DE—B—1231149 décrit un dispositif de transmission avec moteur diesel pour l'entraînement d'une bétonnière sur un tracteur dépourvu de semi-remorque.

La demande de brevet français No. 80 26 650 du 16 décembre 1980 (FR—A—2496039), décrit un système hydrostatique fermé de motorisation de la semi-remorque. La présente invention a pour objet des applications particulières susceptibles d'être obtenues à partir des dispositifs de l'art antérieur notamment, mais non limitativement, tout autre système de motorisation équipant une semi-remorque attelée à un tracteur routier et de travaux de chantiers pouvant en effet être prévu.

Par ailleurs l'élément dectiné à être entraîné par l'appareillage hydraulique visé par l'invention peut être une bétonnière par exemple, disposée sur la semi-remorque, mais cette bétonnière peut être complétée par tout autre élément monté sur la semi-remorque, susceptible d'être entraîne par la boîte réductrice débrayable du système de motorisation équipant la semi-remorque.

Dans ce cas, l'élément est un circuit hydraulique supplémentaire adapté pour asservir par exemple un ou des vérins hydrauliques, un tapis de déchargement, une pompe à béton etc.

L'entraînement en rotation des bétonnières montées sur une semi-remorque ou sur le véhicule porteur lui-même est réalisé actuellement de deux manières:

1—Par une prise de force directe sur le moteur du tracteur, reliée à un circuit hydrostatique de type fermé qui permet de faire varier le sens et la vitesse de rotation de la cuve de la bétonnière. La puissance nécessaire à la rotation de celle-ci est ainsi prélevée sur le moteur du véhicule. La pompe hydraulique à débit variable, composant principal du circuit hydrostatique, est équipée d'un système de régulation connu en soi, permettant d'obtenir un débit relativement constant quelles que soient les variations du régime du moteur thermique du véhicule au cours de sont utilisation routière, et des accélérations provoquées par l'action du chauffeur sur l'accélérateur. Une commande manuelle permet de modifier la valeur du débit souhaité et les sens du fluide pour l'alimentation du moteur hydraulique entraînant le tambour de la bétonnière.

2—Par un moteur thermique supplémentaire dit "auxiliaire", monté en plus du moteur du véhicule et qui remplace ce moteur pour l'entraînement de la bétonnière dans ses différentes fonctions. Ce moteur auxiliaire entraîne une pompe à débit variable alimentant le moteur hydraulique, et qui permet la rotation de la bétonnière. Une commande manuelle permet de faire varier la vitesse et le sens de rotation de la cuve ou tambour de la bétonnière. Ce moteur thermique supplémentaire, comme dans le cas précédent, doit être d'une puissance suffisante pour assurer les fonctions suivantes, propres à l'utilisation de la bétonnière:

a) agitation du béton dans un premier sens de rotation à vitesse lente (1 à 4 tours/minute), le véhicule étant en mouvement ou en attente,

b) malaxage dans le premier sens de rotation, à vitesse lente ou rapide (1 à 8 tours/minute), le véhicule étant à l'arrêt,

c) vidange dans le deuxième sens de rotation de la bétonnière, à vitesse rapide (1 à 16 tours/minute), le véhicule étant à l'arrêt,

c) nettoyage dans l'un ou l'autre des deux sens de rotation, à vitesse rapide (1 à 20 tours/minute), le véhicule étant à l'arrêt.

Les inconvénients de ces deux types de dispositifs sont les suivants:

L'entraînement de la bétonnière pendant que le véhicule est en déplacement se fait au détriment de la puissance du moteur pour l'utilisation routière, la rotation de la cuve ne se fait pas réellement à vitesse constante compte tenu du temps de réponse du circuit de régulation, et la consommation du carburant du véhicule tracteur est sensiblement augmentée.

Il faut également disposer d'un entraînement direct sur le moteur thermique du tracteur, ce qui est rarement prévu par les constructeurs et limite par ce fait le développement de ce système, les moyens de motorisation étant de préférence montés sur les prises de mouvement de la boîte de vitesse, sous réserve que le rapport de vitesse avec le moteur soit constant. Enfin, en cas d'arrêt accidentel du moteur du tracteur, par exemple à l'occasion d'un accident de la circulation, al rotation de la bétonnière s'arrête, le béton se prend dans celle-ci et la bétonnière est perdue.

L'inconvénient du second type de réalisation connu, c'est-à-dire un moteur thermique auxiliaire entraînant une pompe qui alimente un moteur hydraulique accouplé à la bétonnière, consiste essentiellement dans le poids et le coût élevée de cet équipement, dûs à la nécessité de disposer d'une puissance suffisante pour pouvoir entraîner la bétonnière jusqu'à 20 tours/minute. Ainsi, il faut couramment pouvoir disposer d'une puissance de l'ordre de 100 CV pour ce moteur auxiliaire.

L'invention a donc pour but de proposer un appareillage permettant d'entraîner la bétonnière pour les différentes fonctions rappelées ci-dessus (a, b, c et d) et ne présentant par les inconvénients précités.

La présente invention a pour objet un appareillage hydraulique pour l'entraînement d'au moins un appareil d'équipement tel qu'une bétonnière, monté sur une semi-remorque attelée à un tracteur routier et de travaux de chantiers, cet appareillage comprenant un système hydrostatique de motorisation de la semi-remorque, capable d'assurer la transmission mécanique entre une prise de mouvement du tracteur et l'essieu correspondant de la semi-remorque, ledit système hydrostatique étant pourvu d'une pompe hydraulique à débit variable et d'un moteur hydraulique alimenté par la pompe et relié à une boîte réductrice débrayable accouplée à un pont de la semi-remorque, qui se caractérisé en ce qu'il comprend a) un moteur auxiliaire d'entraînement de l'appareil d'équipement, associé à une pompe et à un circuit hydraulique, b) des moyens pour commander l'entraînement en rotation de l'appareil d'équipement, soit par le système hydrostatique de motorisation lorsque le véhicule tracteur est à l'arrêt, à vitesse de rotation lente ou rapide et dans les deux sens de rotation pour assurer les fonctions "malaxage", "vidange" et "nettoyage" dudit appareil, soit par le moteur auxiliaire, lequel, est de faible puissance et réservé uniquement à l'entraînement de l'appareil d'équipement à vitesse lente dans un seul sens de rotation quand le tracteur est en mouvement ou en attente.

L'invention met donc à profit le circuit hydrostatique utilisé jusque là uniquement pour la motorisation de la semi-remorque comme décrit dans le brevet français 80 26 650 (FR—A—2496039), afin d'entraîner alternativement, soit le ou les essieux de la semi-remorque, soit la bétonnière, cette second utilisation étant prévue lorsque le véhicule est à l'arrêt.

Pour éviter que le système hydrostatique de motorisation de la semi-remorque ne soit utilisé pendant la phase "agitation", quand le véhicule est en mouvement, l'invention prévoit comme déjà indiqué, que la bétonnière soit équipée d'un moteur auxiliaire (thermique, électrique ou autre) de faible puissance, par exemple d'une vingtaine de chevaux, avec un circuit hydrostatique ouvert ou fermé pour entraîner le tambour de la bétonnière.

Ainsi, une différence essentielle avec le dispositif connu d'entraînement de la bétonnière par un moteur auxiliaire pour toutes les fonctions de celle-ci, réside dans le fait que, dans l'appareillage selon l'invention, le moteur auxiliaire entraîne la bétonnière uniquement lorsque la puissance nécessaire est minimum, c'est-à-dire à vitesse lente en agitation.

Par contre, pour les autres fonctions de la bétonnière, qui nécessitent une puissance supérieure, on utilise le système hydrostatique de motorisation, qui est donc momentanément détourné de sa fonction initiale lorsque le véhicule est à l'arrêt.

L'invention permit ainsi, entre autres avantages, d'utiliser le circuit hydrostatique de motorisation de façon optimum, sans aucune contrainte en utilisation "route", ainsi que principalement la prise de mouvement de la boîte de vitesse des tracteurs, généralement montée par les constructeurs de camions.

De plus, l'invention permet de diminuer le poids mort et le coût de l'équipement nécessaire à l'entraînement de la bétonnière, puisqu'il suffit pour la fonction agitation d'un moteur auxiliaire de faible puissance.

D'autres particularités et avantages de l'invention apparaîtront au cours de la description qui va suivre, fait en référence aux dessins annexés sur lesquels on à représenté une forme de réalisation non limitative de l'invention.

La figure 1A est un schéma de la partie de l'appareillage hydraulique et électrique montée sur le tracteur, d'une forme de réalisation selon l'invention de cet appareillage.

La figure 1B est un schéma hydraulique et électrique complémentaire de la figure 1, représentant la partie de l'appareillage, montée sur la semi-remorque portant la bétonnière, et attelée au véhicule tracteur.

La figure 2 est un schéma identique à la figure 1B mais montrant le fonctionnement des circuits hydrauliques et le sens de circulation du fluids dans ceux-ci lorsque l'entraînement de la bétonnière est assuré par le moteur auxiliaire et que le circuit hydrostatique est utilisé pour la motorisation de la semi-remorque.

La figure 3 est un schéma identique à celui de la figure 1B, montrant le fonctionnement de l'appareillage et le sens de circulation du fluide lorsque l'entraînement de la bétonnière est assuré par le système hydrostatique de motorisation de la semi-remorque dans le premier sens de rotation correspondant à la marche avant.

La figure 4 est un schéma identique à la figure 1B, montrant le fonctionnement de l'appareillage et le sens de circulation du fluide dans le circuit hydrostatique de motorisation et le circuit du moteur auxiliaire lorsque l'entraînement de la bétonnière est assuré par le système hydrostatique dans le deuxième sens de rotation correspondant à la marche arrière.

Les figures 5 et 6 sont des schémas hydrauliques illustrant l'application de l'appareillage à l'entraînement d'un élément autre qu'une bétonnière, comportant un circuit hydraulique supplémentaire.

Le dispositif représenté aux dessins est un appareillage hydraulique destiné à l'entraînement des essieux d'une semi-remorque, et d'un élément disposé sur la semi-remorque, tel qu'une bétonnière, la semi-remorque étant attelée à un tracteur routier et de travaux de chantiers.

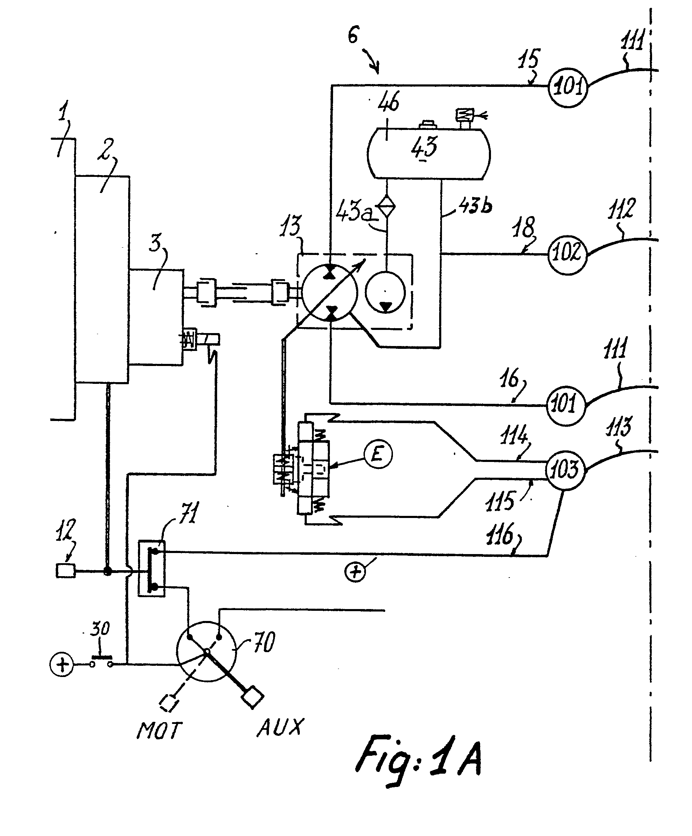

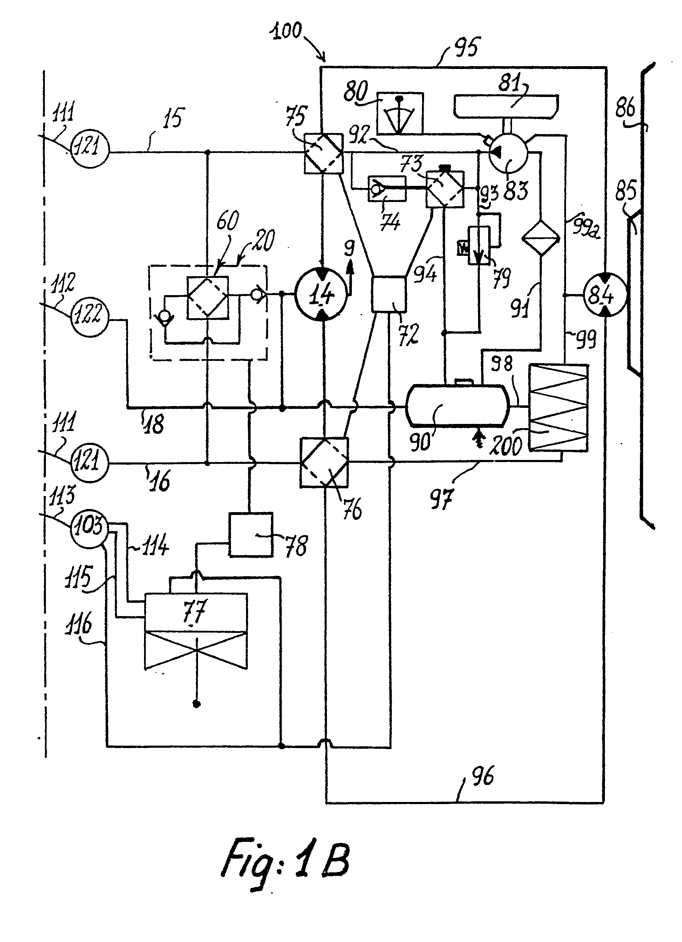

Cet appareillage, représenté dans son ensemble aux figures 1A et 1B, comporte les circuits hydrauliques décrits dans le brevet français No. 80 26 650 (FR—A—2496039) précité, le premier de ces documents décrivant un système hydrostatique de motorisation des essieux de la semi-remorque.

Le véhicule tracteur comprend un moteur thermique 1 pourvu d'une boîte de vitesses 2 et d'une prise de mouvement débrayable 3. Le dispositif de motorisation des essieux de la semi-remorque comprend un système hydrostatique fermé 6 assurant la transmission mécanique entre la prise de mouvement 3 et l'essieu correspondant 9 de la semi-remorque. Le système hydrostatique 6 comporte une pompe hydraulique 13 à débit variable, reliée à la prise de mouvement 3, un moteur hydraulique 14 monté sur la semi-remorque, alimenté par la pompe 13 au moyen de deux canalisations 15, 16, et relié à une boîte de transfert réductrice débrayable, accouplée à un pont 9 de la semi-remorque. Comme décrit au brevet 80 26 650, la pompe 13 peut être bloquée dans l'une ou l'autre des deux cylindrées distinctes correspondant dans un sens à la marche avant du véhicule et dans l'autre à la marche arrière de celui-ci. D'autre part, des moyens, décrits au brevet précité sont prévus pour synchroniser les vitesses du tracteur et de la semi-remorque sur au moins une vitesse en marche avant et sur une vitesse en marche arrière.

Le circuit hydrostatique 6 peut reproduire les mouvements commandés à partir de la boîte de vitesses 2 par l'intermédiaire de son levier manuel 12 (marche avant dans un sens de circulation du fluide, marche arrière par inversion du sens de circulation et point mort par équilibre des circuits de fluide).

Le circuit électrique de commande de la motorisation de la semi-remorque comporte un contacteur 30 dont la fermeture, entraînée par l'enclenchement de la prise 3, provoque la mise sous tension du circuit général de commande de l'entraînement du ou des essieux de la semi-remorque. Ce circuit, non représenté, est décrit en détail dans le brevet précité 80 26 650.

Le dispositif est équipé d'un réservoir hydraulique 43 relié par des canalisations 43a, 43b à la pompe 13 ainsi qu'au moteur 14 par une canalisation 18, sur laquelle sont interposée une valve 102 d'accouplement rapide (à basse pression) et un raccord tournant 122, ces deux éléments étant reliés par une conduite 112. Le réservoir 43 alimente normalement la pompe 13, et peut assurer la réalimentation de secours du moteur 14 lorsque la pompe 13 n'est pas entraînée.

Sur la semi-remorque, est disposée une bétonnière 86 équipée d'un réducteur 85 recevant un moteur hydraulique 84, de préférence identique au moteur 14.

Conformément à l'invention, l'appareillage comprend des moyens pour commander l'entraînement en rotation de la bétonnière 86 par le système hydrostatique de motorisation 6 lorsque le véhicule tracteur est à l'arrêt, à vitesse de rotation lente ou rapide et dans les deux sens de rotation possibles pour assurer les fonctions "malaxage", "vidange" et "nettoyage" de la bétonnière. Pour assurer la fonction "agitation", lors de laquelle la rotation de la cuve de la bétonnière 86 est lente, et n'atteint pas le quart de la vitesse de rotation maximum, l'invention prévoit de monter sur la semi-remorque un moteur auxiliaire 81, de faible puissance (par exemple 20 CV environ), qui entraîne une pompe hydraulique 83. Celle-ci est de préférence à débit variable et en circuit ouvert. La fonction "agitation" ne nécessitant qu'un sens de rotation de la bétonnière 86, un circuit fermé ne se justifie pas compte tenu de son coût. Cependant un débit variable permet un réglage souple de la vitesse de rotation de la cuve 86 tout en utilisant le moteur 81 à son régime de rendement optimum. Le moteur auxiliaire 81 peut être de tout type approprié connu en soi, et la pompe 83 est reliée au moteur 84 par un circuit hydraulique (92, 95, 96, 97, 91), de type ouvert et également connu en soi, bien que ce type de circuit ne soit pas couramment appliqué pour l'entraînement d'une bétonnière. La pompe 83 est réglée par un organe de télécommande 80 permettant le réglage manuel par le conducteur de la cylindrée de la pompe 83. Le choix de la vitesse de rotation de la cuve 86 est effectué par blocage de la cylindrée de la pompe 83 à une valeur choisie par le conducteur, la télécommande 80 pouvant être préréglée sur plusieurs positions intéressantes pour simplifier l'utilisation.

Le circuit hydraulique alimenté par la pompe 83, désigné par la référence générale 100, comprend en outre un limiteur de pression 79 disposé sur une conduite 93 reliant la pompe 83 à un réservoir tampon 90 dans lequel débouchent les canalisations 18 et 91. De plus, le circuit 100 est équipé d'un échangeur thermique 200, assurant une fonction de refroidisseur, relié au réservoir 90 par une canalisation 98, au moteur 84 par une canalisation 99 et dans lequel débouche la canalisation 97. La canalisation 99 est également reliée par une conduite 99 à la pompe 83.

Sur la canalisation 15 sont interposés une valve d'accouplement rapide (haute pression) 101 et un raccord tourrant 121 reliés par une conduite 111, et de même pour la canalisation 16.

Les moyens de commande de la rotation de la bétonnière 86 par le système de motorisation 6 comprennent un circuit électrique à commande manuelle par le conducteur, équipé d'un commutateur 70 à deux positions "MOT" et "AUX", relié à l'interrupteur 30. La première position "MOT" (voir figure 1A), assure la motorisation de la semi-remorque par le système hydrostatique 6, tandis que la seconde position "AUX" assure la transmission de la commande électrique à un relais 72 capable de déclencher des vannes 75, 76 de liaison entre le système hydrostatique 6 et le circuit hydraulique 100 du moteur auxiliaire 81. Les vannes 75 et 76 sont dans l'exemple illustré à la figure 1B, du type à quatre voies. Le relais 72 est également apte à déclencher une troisième vanne 73 reliée par une canalisation 94 au réservoir tampon 90, ainsi qu'à la canalisation 93, et à la canalisation 92 par une conduite sur laquelle est placé un clapet anti-retour 74.

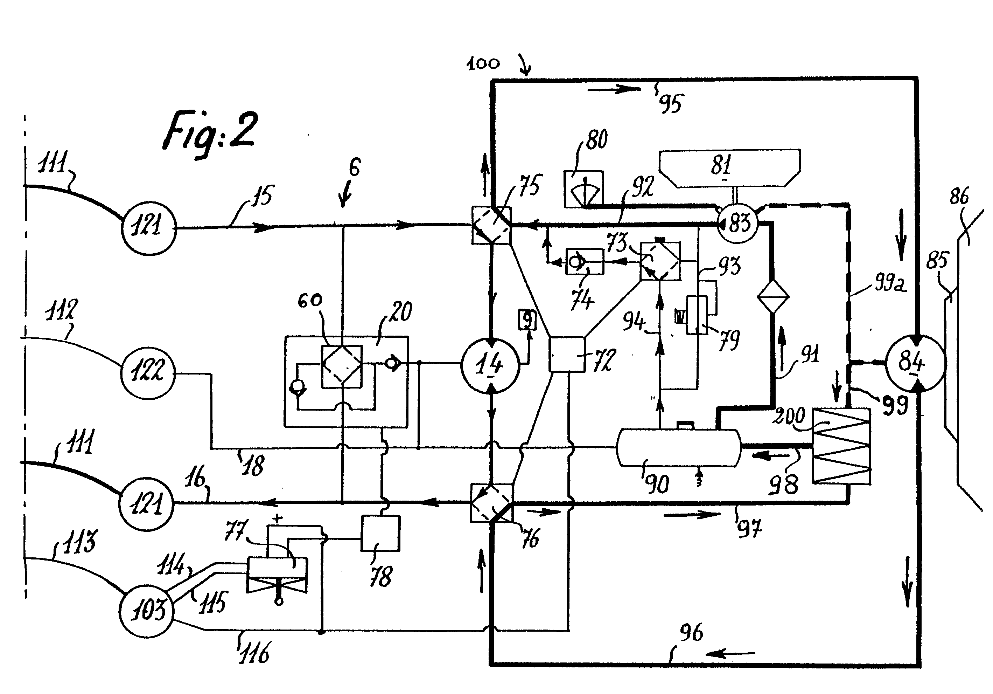

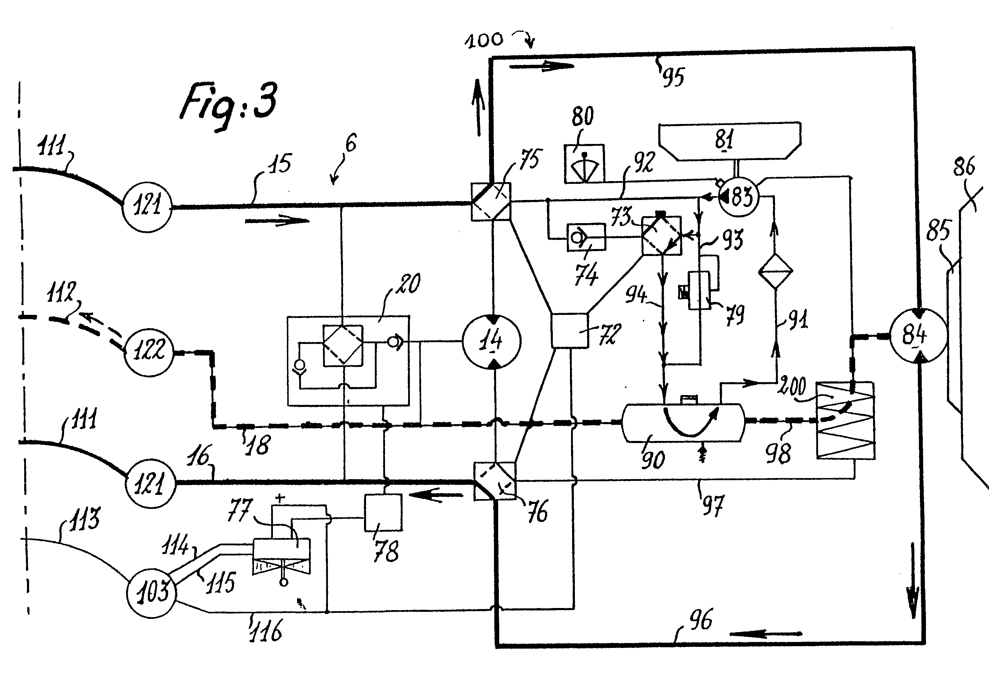

Dans une première position de repos, correspondant à l'entraînement de la bétonnière 86 par le moteur 81 et à la motorisation de la semi-remorque, la vanne 73 permet d'alimenter le moteur 84 à partir du réservoir 90 (voir figure 2). Dans sa seconde position active, déclenchée par le relais 72, la vanne 73 refoule au réservoir 90 le fluide hydraulique venant de la pompe 83, rendant ainsi inactif le moteur 81 tandis que le circuit 95, 96 relié au moteur 84 est en communication avec le système hydrostatique 6, grâce aux vannes 75 et 76 qui, commandées par le relais 72, établissent la communication entre les canalisations 95, 96 et respectivement les canalisations 15 et 16, comme illustré à la figure 3.

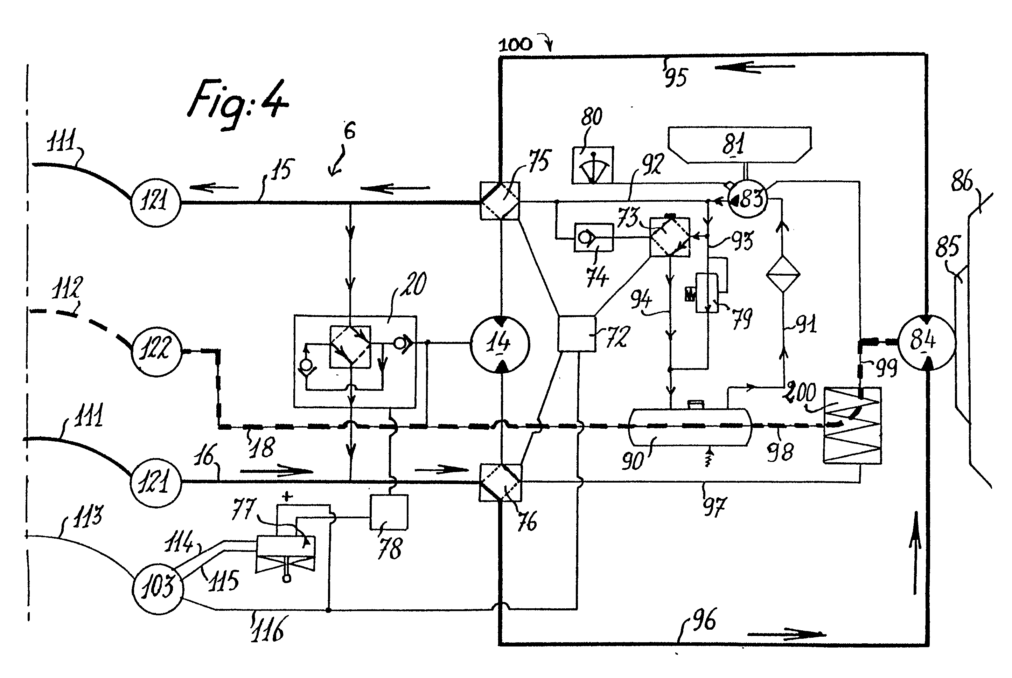

Le commutateur 70 est relié, par l'intermédiaire de prises (103), reliées par une connexion 113, à un organe de commande tel qu'un rhéostat inverseur 77 (figure 1B) connecté au relais 72 et à la prise 103 par des liaisons 114 et 115. L'une de ces liaisons, par exemple 114, est utilisée pour le premier sens de rotation de la béonnière 86 correspondant à un premier sens de circulation de fluide dans le moteur 84 (par exemple marche avant comme indiqué par les flèches sur la figure 3). L'autre liaison (par exemple 115) est utilisée pour le second sens de rotation de la bétonnière 86 correspondant au sens de circulation opposé du fluide (marche arrière) illustré par les flèches portées sur la figure 4. Ce réglage est exécuté manuellement par le conducteur.

Le commutateur 70 est relié aux prises 103 et au rhéostat 77 par une connexion 116, avec de préférence interposition d'un coupe-circuit de sécurité 71 (figure 1A). Ce coupe-circuit est branché sur le levier de vitesses 12, de façon que l'information électrique provenant du commutateur 70 mis dans la position "AUX" ne soit transmise au rhéostat 77 que si le levier 12 est bien au point mort, le véhicule étant à l'arrêt.

Suivant une particularité de l'invention, un relais 78 est intercalé entre le rhéostat 77 et le circuit de sécurité. Ce relais 78 est apte à transmettre à l'inverseur 60 un ordre du rhéostat 77 pour placer cet inverseur dans sa position permettant le retour du fluide de la canalisation 15 située en aval du moteur 84 à la canalisation amont 16, en cas de contre-pression dans la canalisation aval 15.

Cet agencement permet au fluide hydraulique de circuler dans le système hydrostatique 6 et dans le circuit 100 du moteur auxiliaire 81 dans le sens de rotation de la bétonnière 86 correspondant à la marche arrière, illustré par les flèches portées sur la figure 4.

Enfin les fils 114, 115 relient la prise 103 à un électrodistributeur E monté sur la pompe 13. Celle-ci est connue en soi, elle est hydraulique, du type circuit fermé, et équipée d'une pompe de gavage et d'un circuit de réalimentation en cas de surcharge. L'électrodistributeur E pilote l'inclinaison du plateau de O à la cylindrée maximum dans les deux sens, ce qui permet deux sens de circulation du fluide. La description de la demande de brevet 80 26 650 fait apparaître que les deux solenoïdes de l'électrodistributeur E sont alimentés à l'intensité maximum nécessaire pour obtenir immédiatement le pilotage de la pompe à la cylindrée maximum préréglée. Dans le système présentement décrit, l'alimentation électrique proportionnelle est transmise par un circuit annexe représenté par les éléments 77, 103, 113, 114 ou 115, afin d'obtenir une variation du débit de la pompe 13 en fonction de l'intensité programmée.

Le fonctionnement de l'appareillage qui vient d'être décrit est le suivant.

1. Fonctionnement en phase "agitation" de la bétonnière 86 par rotation lente dans le premier sens de rotation.

Dans ce mode de fonctionnement, illustré à la figure 2, l'entraînement de la bétonnière 86 à vitesse lente est assuré par le moteur auxiliaire 81 et son circuit 100, qui alimente le moteur 84, le fluide parcourant ce circuit comme indiqué par les flèches portées sur les canalisations 92, 95, 96, 97, 98, 91.

Les fuites du moteur 84 et de la pompe 83 s'écoulent par les connexion 99 et 99a jusqu'au réservoir 90 par le refroidisseur 200 et la jonction 98. En cas de charge entraînante (par exemple inertia de la cuve de la bétonnière en charge lors du retour à zéro de la pompe 83), le moteur 84 est alimenté par circulation du fluide de 90 vers 84 par les connexions 94, 92 et 95. Le clapet anti-retour 74 assure le passage de fluide uniquement dans le sens de 90 vers 92 par passage par la vanne 73 en position non excitée.

Le circuit 100 est isolé du circuit hydrostatique 6 par les vannes 75 et 76, et le circuit hydrostatique 6 entraîne le ou les essieux 9 de la semi-remorque, la véhicule étant en déplacement.

Pendant cette phase d'entraînement de la bétonnière 86 par le moteur 81, le commutateur 70 est en position "MOT", de sorte que le relais 72 n'est pas excité par le rhéostat 77 et que les vannes 75, 76 sont au repos, en isolant le circuit 100 du circuit hydrostatique 6.

2. Fonctionnement dans le premier sens de rotation (marche avant) pour assurer les fonctions "malaxage" ou "nettoyage" de la bétonnière 86.

Ce mode de fonctionnement est illustré par les flèches portées sur la figure 3, indiquant le sens de circulation du fluide.

Le conducteur place le commutateur 70 dans la position "AUX", de sorte que le rhéostat 77 excite le relais 72 qui fait basculer les vannes 75, 76 dans leur position active, dans laquelle elles établissent la communication entre le circuit 6 et le circuit 100. Plus précisément, la canalisation 15 est mise en communication avec la canalisation 95, et le canalisation 16 communique avec la canalisation 96. De plus, le relais 72 déclenche la vanne 73 qui vient en position active et refoule le débit de la pompe 83 au réservoir 90 (flèches sur la figure 3). Les fuites du moteur 84 s'écoulent vers le réservoir 90 par les canalisations 99, 98 et l'échangeur 200.

Le réservoir étanche 90 permet d'éviter le cavitation éventuelle de la pompe 83 par les pertes de charge pouvant résulter des faibles sections des circuits de retour. De préférence le réservoir 43 est pressurisé à très faible pression, pour améliorer les conditions d'alimentation des pompes 13 et 83. Par construction, le réservoir étanche 90 est relié au réservoir principal 43, le retour des fuites des circuits 100 et 6 étant commun.

L'échangeur 200 assure, en plus du réservoir 90, une température normale du circuit hydraulique 100 par passage obligé du retour des fuites du moteur 84 et de la pompe 83. En position "AUX" la pompe 13 peut être réglée sur une cylindrée variant de O au maximum par action sur le rhéostat 77. En position "MOT" la pompe 13 est réglée soit sur la cylindrée O, soit sur la cylindrée maximum.

Dans sa position repos (figure 2), la vanne 73 permet l'alimentation du moteur 84 dans un seul sens de rotation par les liaisons 92 et 95, le retour des fuites 99 et le circuit 96, 97 étant en accès direct avec le réservoir 90 par passage par le refroidisseur 200 et le circuit 98.

En position excitée, déclenchée par la mise du commutateur 70 sur la position "AUX", la vanne 73 permet comme expliqué ci-dessus, à la pompe 83 de refouler dans le réservoir 90, quel que soit le débit affiché par la pompe, et ce par les circuits 93 et 94.

Complémentairement, un circuit hydraulique supplémentaire peut être adapté, par exemple pour asservir un tapis ou une pompe à béton.

La pompe 13 alimente le moteur 84 par les circuits 15, 95 ou 16, 96, en fonction du sens du fluide. Le moteur 14 se trouve libéré et lubrifié par ses liaisons directes au circuit de retour aux réservoirs 90 et 43.

3. Fonctionnement dans le deuxième sens de rotation de la bétonnière 86, correspondant à la marche arrière.

Ce mode de fonctionnement, permettant soit la vidange à vitesse rapide, soit le nettoyage de la bétonnière à vitesse rapide, le véhicule étant à l'arrêt, est indiqué par les flèches portées sur la figure 4.

Pour se mettre en marche arrière, du fait que le levier de vitesse 12 est per définition au point mort, il faut envoyer un ordre à partir du rhéostat 77 jusqu'à l'inverseur distributeur 60 du circuit de sécurité 20, afin de placer celui-ci en position "excitée", correspondant à la position "marche arrière" en fonction "motorisation" du circuit hydrostatique 6.

Pour ce faire, le conducteur commande par le rhéostat 77, de façon connue en soi et non représentée, le relais 78 qui fait basculer l'inverseur 60 dans sa position représentée à la figure 4. Dans celle-ci, l'inverseur 60 autorise, en cas de contre-pression dans la canalisation 15 à basse pression (le fluide circulant des canalisations 16, 96 vers les canalisations 15, 95 par le moteur 84), le fluide à passer de la canalisation 15 à la canalisation 16 (flèches). Par ailleurs, les vannes 75, 76 sont dans la même position qu'à la figure 3, et mettent en communication les circuits hydrauliques 6 et 100. De même la vanne 73 continue à refouler le débit de la pompe 83 au réservoir 90.

On notera que le circuit de sécurité 20, lorsqu'il est en position de repos (non excité), correspond à la marche avant. A celle-ci correspondent le premier sens de rotation de la bétonnière 86 et le premier sens de circulation du fluide, ce qui permet d'éviter le blocage du tambour de la bétonnière en cas de retour à zéro de la cylindrée de la pompe 13.

Quand on inverse le sens de rotation de la bétonnière 86 (figure 4), le circuit 20 soit être excité.

En plus des avantages mentionnés précédemment, l'invention en présente d'autres:

—elle permet d'augmenter la fiabilité de l'appareillage et de diminuer sont coût d'entretien, avec une utilisation plus rationnelle des énergies disponibles.

—compte tenu de la faible puissance nécessaire à la phase "agitation" de la bétonnière 86, le moteur auxiliaire 81 peut être soit un moteur thermique, soit un moteur électrique ou encore pneumatique etc.

—le moteur auxiliaire 81 constitue un système complémentaire d'entraînement de la bétonnière 86, permettant de pallier à un arrêt accidentel du moteur thermique du tracteur ou inversement.

Enfin, la bétonnière peut être remplacée par un autre élément tel qu'une pompe à béton, foreuse, treuil, ou tous autres systèmes pouvant être entraînés par un moteur hydraulique. Complémentairement, un appareillage hydraulique supplémentaire peut être asservi de façon indépendante par prélèvement, sur la boîte réductrice débrayable du circuit de motorisation 6, du couple développé par le moteur hydraulique de la motorisation.

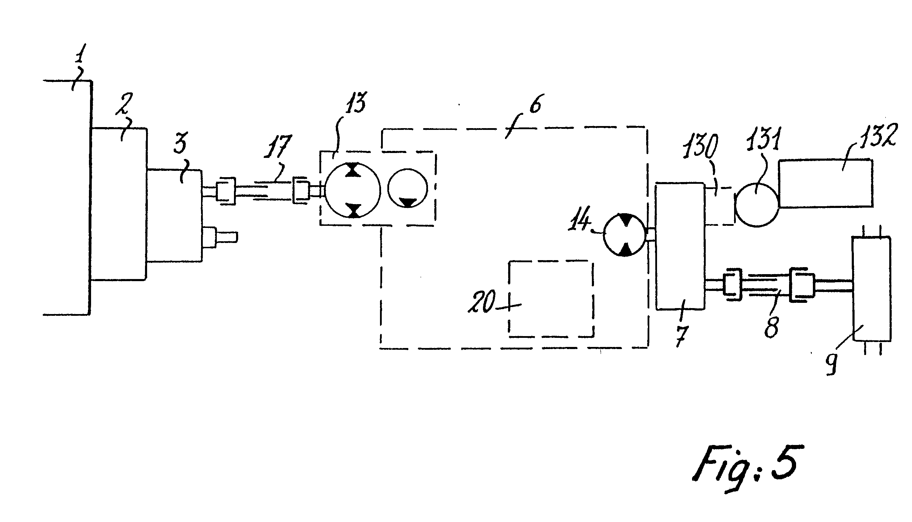

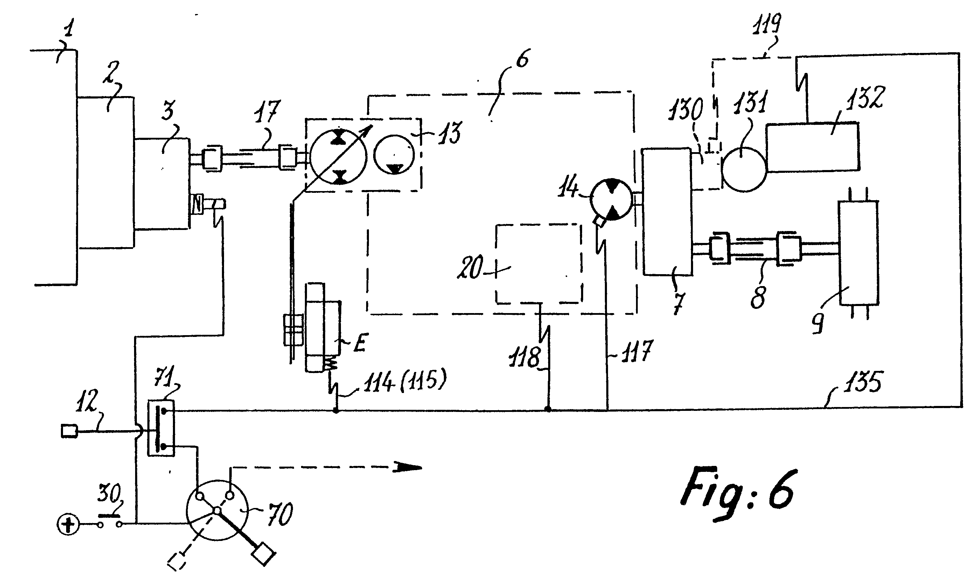

Une telle mise en oeuvre de l'appareillage visé par l'invention est illustrée aux figures 5 et 6, qui montrent comment on peut réaliser un système d'entraînement auxiliaire assurant l'asservissement d'un circuit hydraulique supplémentaire 132 par prélèvement sur la boîte réductrice 7 du couple à développer par le moteur hydraulique 14 du système de motorisation 6.

Ce circuit hydraulique supplémentaire 132 est indépendant du circuit de motorisation 6 et peut être asservi de deux manières:

—Véhicule en marche: système de motorisation 6 en fonction.

—Véhicule à l'arrêt: boîte de vitesses du tracteur au point mort.

Les fonctions possibles de ce circuit supplémentaire 132 sont connues en soi et ne seront pas décrites en détail. Un tel circuit peut être utilisé par exemple pour asservir soit un équipement complémentaire (tapis de déchargement, pompe à béton, vérins stabilisateurs etc.) si la semi-remorque motorisée est équipée d'une bétonnière comme décrit ci-dessus, soit une toute autre fonction (benne, grue, pont élévateur etc.) si la semi-remorque motorisée est équipée d'une autre carrosserie.

Dans cette forme de réalisation de l'appareillage visé par l'invention, on utilise le système de motorisation 6 pour mettre en oeuvre les fonctions précitées à la place d'un moteur thermique quelconque habituellement utilisé, qui est généralement celui du tracteur.

Cette façon de procéder présente l'avantage de libérer le tracteur d'un dispositif généralement encombrant, ce qui lui confère une plus grande polyvalence de traction et permet de grouper sur la semi-remorque les fonctions spécifiques de celle-ci. De plus, le point mort et le coût de revient se trouvent sensiblement réduits.

Le moteur hydraulique 14 monté sur la boîte 7 entraîne le pont 9 de la semi-remorque lorsque le dispositif de motorisation 6 est en fonction et que la boîte de réduction 7 est crabotée et entraîne la transmission 8. La boîte 7 est conçue pour recevoir sur une de ses pignoneries une pomps hydraulique 131. La vitesse de rotation de cette dernière est proportionnelle à celle du moteur 14 et par conséquent à celle du moteur 1 du tracteur.

Dans le cas où la pompe 131 est prévue pour un seul sens de rotation, une prise de mouvement débrayable 130 est intercalée entre la pignonerie de la boîte 7 et la pompe 131. Ceci permet d'isoler un des sens de rotation du moteur hydraulique 14. La mise en fonction du circuit 132 est conditionnée par l'information de crabotage de la prise 130. Cette information peut être asservie sur l'un des composants de la motorisation (par exemple: solénoïde de l'électrodistributeur E de la pompe 13, contacteur de la boîte de vitesses 2 etc. . . ., ces exemples n'étant pas limitatifs), pour sélectionner en toute sécurité le sens de rotation du moteur 14 utilisé pour entraîner la pompe 131.

On décrira tout d'abord la façon dont le circuit hydraulique 132 est asservi lorsque le véhicule est en marche, et que le système de motorisation 6 est en fonction (figure 5).

Le moteur 14 entraîne par la pignonerie de la boîte 7, la transmission 8 au pont 9 de la semi-remorque et la pompe 131. Le circuit hydraulique 132 est de type connu en fonction de la pompe 131 et des asservissements souhaités: vérine, moteur hydraulique ou pneumatique etc. . . . . Les différentes version possibles ne seront pas décrites en détail, étant connues et largement utilisées. Lorsque le circuit de motorisation 6 entraîne la pompe 131, et que le circuit 132 est en position neutre, la puissance d'entraînement nécessaire au circuit 132 est négligeable.

a) Ou bien la pompe 131 refoule au réservoir du circuit 132, s'il s'agit d'une pompe à cylindrée fixe à un ou deux sens de rotation.

b) Ou bien la pompe 131 est à la cylindrée O, s'il s'agit d'une pompe à débit variable à circuit ouvert ou fermé.

L'utilisation du circuit hydraulique 132 indépendant du circuit de motorisation 6 peut être assurée par tout moyen connu. La mise en oeuvre du circuit 132 est conditionnée par la puissance disponible à la sortie de la boîte 7 et développée par le moteur 14, en plus de la puissance nécessaire à l'entraînement du pont 9 de la semi-remorque.

On décrira maintenant en référence à la figure 6 le mode d'asservissement du circuit supplémentaire 132, lorsque le véhicule est à l'arrêt.

Par définition le moteur hydraulique 14 entraîne la pignonerie de la boîte 7. La pompe hydraulique 131 est entraînée à une vitesse proportionnelle à la vitesse de rotation du moteur 14. Le crabotage de la boîte 7 n'est pas effectué, et la transmission 8 ainsi que le pont 9 ne sont pas entraînés par le moteur 14. Ce dernier entraîne par la boîte 7 la pompe 131 dans les deux sens de rotation. La prise de mouvement débrayable 130 est intercalée en cas de nécessité, par exemple si la pompe 131 ne peut être utilisée que dans un seul sens de rotation.

Le commutateur 70 est placé en position "AUX", et interrompt alors toutes les commandes électriques sur le circuit normal de motorisation 6. Ce commutateur assure alors l'alimentation du circuit annexe 135 pour asservir par tout moyen connu les éléments suivants:

—Le contacteur 71 pour obtenir l'information relative à la position "point mort" du levier 12. Ce montage assure la sécurité d'utilisation à l'arrêt.

—Un des solénoïdes de l'électrodistributeur E par un circuit 114 ou 115. Le choix du solénoïde conditionne par définition le sens de rotation du moteur 14.

On notera que si le système de motorisation 6 est équipé d'un système roue libre 20 comme illustré aux figures annexées et décrit dans le demande de brevet 81 21742, il est nécessaire de prévoir l'asservissement de ce dernier en fonction de la position "repos" du système roue libre 20. Cela revient à utiliser le solénoïde de la pompe 13 correspondant au sens marche avant. Dans le cas où l'utilisation du solénoïde correspondant à la marche arrière est nécessaire, il faut prévoir une commande électrique du système 20 par le circuit 118, compte tenu que le levier 12 est au point mot au lieu de la marche arrière.

—Un ou plusieurs composants du circuit supplémentaire 132 par le circuit 135 (distributeurs, vannes etc. . . .).

On notera que le circuit hydraulique 132 peut être commandé par tout moyen connu en soi. L'utilisation du circuit 132 est conditionnée par la puissance disponible à la sortie de la boîte 7 et développée par le moteur 14.

—Le prise de mouvement 130 par le circuit 119 si la pompe 131 n'admet pas les deux sens de rotation.

—Le moteur 14, par le circuit 117, si ce dernier est à cylindrée variable et que l'on souhaite obtenir pour l'utilisation du circuit hydraulique 132 une cylindrée différente de celle affichée.

Le circuit auxiliaire d'asservissement qui vient d'être décrit permet ainsi de dissocier le fonctionnement du système de motorisation 6 normalement mis en oeuvre en marche, et d'obtenir à l'arrêt, l'entraînement de la pompe 131 pour actionner le circuit hydraulique 132 dont les composants peuvent être commandés par tout moyen connu en soi.

## Revendications

1. Appareillage hydraulique pour l'entraînement d'au moins un appareil d'équipement tel qu'une bétonnière (86), monté sur une semi-remorque attelée à un tracteur routier et de travaux de chantiers, cet appareillage comprenant un système hydrostatique (6) de motorisation de la semi-remorque, capable d'assurer la transmission mécanique entre une prise de mouvement (3) du tracteur et l'essieu correspondant (9) de la semi-remorque, ledit système hydrostatique (6) étant pourvu d'une pompe hydraulique à débit variable (13) et d'un moteur hydraulique (14) alimenté par la pompe (13) et relié à une boîte réductrice débrayable (7) accouplée à un pont de la semi-remorque, caractérisé en ce qu'il comprend a) un moteur auxiliaire (81) d'entraînement de l'appareil d'équipement (86), associé à une pompe (83) et à un circuit hydraulique (100), b) des moyens pour commander l'entraînement en rotation de l'appareil d'équipement (86), soit par le système hydrostatique (6) de motorisation lorsque le véhicule tracteur est à l'arrêt, à vitesse de rotation lente ou rapide et dans les deux sens de rotation pour assurer les fonctions "malaxage", "vidange" et"nettoyage" dudit appareil (86), soit par le moteur auxiliaire (81), lequel est de faible puissance et réservé uniquement à l'entraînement de l'appareil d'équipement (86) à vitesse lente dans un seul sens de rotation quand le tracteur est en mouvement ou en attente.

2. Appareillage selon la revendication 1, caractérisé en ce que le circuit hydraulique (100) comprend un moteur hydraulique (84) d'entraînement de l'appareil d'équipement et est monté en dérivation du système hydrostatique (6), ce moteur hydraulique (84) étant alimenté, soit par le circuit hydraulique (100) isolé du système hydrostatique (6) lorsque le tracteur est en mouvement ou en attente (Figure 2), soit par le système hydrostatique (6) lorsque le tracteur est à l'arrêt (Figures 3—4), des moyens étant prévus pour isoler temporairement le moteur auxiliaire (81) et sa pompe (83).

3. Appareillage selon la revendication 1 ou 2 dans lequel l'appareil d'équipement est une bétonnière (86), caractérisé en ce que les moyens de commande de la rotation de la bétonnière (86) par le système hydrostatique de motorisation (6) comprennent un circuit électrique à commande manuelle par le conducteur, équipé d'un commutateur (70) à deux positions "MOT" et "AUX", la première position assurant la motorisation de la semi-remorque par le système hydrostatique (6) et la seconde position "AUX" assurant la transmission de la commande électrique à un relais (72) capable de déclencher des vannes (75, 76) de liaison entre le système hydrostatique de motorisation (6) et le circuit hydraulique (100) du moteur auxiliaire (81), de telle sorte que, alors que ces vannes (75, 76) isolent le système hydrostatique (6) du circuit hydraulique (100) du moteur auxiliaire (81) lorsque ce dernier entraîne la bétonnière (86) et que le commutateur (70) est en position "MOT", lesdits vannes mettent en communication le système hydrostatique (6) et le circuit hydraulique (100) du moteur auxiliaire (81) quand le commutateur (70) est en position "AUX", la pompe (13) du système hydrostatique (6) assurant alors l'entraînement d'un moteur hydraulique (84) du circuit auxiliaire (100) et corrélativement la rotation de la bétonnière (86).

4. Appareillage selon la revendication 3, caractérisé en ce que le relais (72) est en liaison de commande avec les deux vannes (75, 76) aptes à isoler ou à mettre en communication le système hydrostatique (6) et le circuit hydraulique auxiliaire (100), et avec une troisième vanne (73) qui, dans une première position de repos correspondant à l'entraînement de la bétonnière (86) par le moteur auxiliaire (81) et à la motorisation de la semi-remorque, permet d'alimenter le moteur (84) d'entraînement de la bétonnière à partir d'un réservoir (90), et qui dans sa seconde position active déclenchée par le relais (72), refoule au réservoir (90) le fluide hydraulique venant de la pompe (83) associée au moteur auxiliaire (81), rendant ainsi inactif ce dernier tandis que le circuit (100) du moteur (84) d'entraînement de la bétonnière (86) est en communication avec le système hydrostatique (6) de motorisation, le réservoir étanche (90) étant relié au réservoir principal (43), commun aux circuits de motorisation (6) et (100) du moteur auxiliaire (81).

5. Appareillage selon la revendication 4, caractérisé en ce que le commutateur (70) est relié par l'intermédiaire de prises (103) à un organe de commande tel qu'un rhéostat (77), connecté au relais (72) et à une prise (103) par des liaisons (114, 115) dont l'une est utilisée pour le premier sens de rotation de la bétonnière (86) correspondant à un premier sens de circulation du fluide dans le moteur (84) d'entraînement de celle-ci, et l'autre prise est utilisée pour le second sens de rotation de la bétonnière (86), ce réglage étant exécuté manuellement par le conducteur, et par le fait que l'un des solénoïdes de l'électrodistributeur (E) de la pompe (13) reçoit une information électrique proportionnelle par le rhéostat (77) lorsque le commutateur (70) est en position (AUX), au lieu d'une information électrique "tout ou rien" en position (MOT) du commutateur.

6. Appareillage selon la revendication 3, comprenant un circuit hydraulique de sécurité (20) branché sur les canalisations (15, 16) du système hydrostatique (6), assurant la liaison entre la pompe (13) et le moteur hydraulique (14), muni d'un inverseur (60) pouvant être commandé par la boîte de vitesses (2), et agencé pour permettre au moteur (14) monté sur la semi-remorque de tourner et d'être alimenté quand la pompe (13) ne tourne pas ou n'est pas encore à la cylindrée nécessaire pour que les roues de la semi-remorque tournent à la même vitesse que celles du moteur, caractérisé en ce que, afin de permettre au fluide hydraulique de circuler dans le système hydrostatique de motorisation (6) et dans le circuit (100) associé au moteur auxiliaire (81) dans le sens de rotation de la bétonnière (86) correspondant à la marche arrière, alors que le levier de vitesses est nécessairement au point mort, il est prévu un relais (78) entre l'organe de commande (77) et le circuit de sécurité (20), ce relais (78) étant apte à transmettre à l'inverseur (60) un ordre de l'organe (77) pour placer ledit inverseur (60) dans sa position permettant le retour du fluide de la canalisation (15) située en aval du moteur hydraulique (84) à la canalisation amont (16) en cas de contre-pression dans la canalisation aval (15).

7. Appareillage selon l'une des revendications 3 à 6, caractérisé en ce que, entre le commutateur (70) et l'organe de commande (77), est intercalé un coupe-circuit (71) de sécurité branché sur le levier de vitesses (12) de façon que l'information électrique provenant du commutateur (70) mis dans la position "AUX" ne soit transmise à l'organe de commande (77) que si le levier de vitesses (12) est bien au point mort, le véhicule étant à l'arrêt.

8. Appareillage selon l'une des revendications 1 à 7, caractérisé en ce qu'il comporte un circuit hydraulique supplémentaire (132) asservi par prélèvement, sur la boîte réductrice (7) de transfert accouplée au moteur hydraulique (14) du système de motorisation, de couple développé par ce moteur, au moyen d'une pompe hydraulique (131) accouplée à la boîte réductrice (7) et adaptée pour entraîner le circuit hydraulique (132) lorsque le véhicule tracteur est en marche avec le circuit de motorisation (6) en fonction ou à l'arrêt, à l'arrêt la commande de l'asservissement étant assurée par un circuit électrique (135) relié au commutateur (70) placé en position "AUX" l'asservissement du circuit hydraulique supplémentaire (132) étant susceptible de commander par exemple des vérins hydrauliques, une foreuse, un treuil, une pompe à béton ou un tapis de déchargement.

9. Appareillage selon la revendication 8, caractérisé en ce qu'il comporte des moyens permettant d'alimenter le circuit supplémentaire (132) en alternance avec le circuit hydraulique (100) d'entraînement de l'appareil d'équipement de la semi-remorque.

**Patentansprüche**

1. Hydraulische Vorrichtung für den Antrieb wenigstens eines Ausrüstungsgeräts, wie einem Betonmischer (86), welches auf einem Sattelanhänger angeordnet ist, der an eine Zugmaschine für die Straße oder für Baustellenarbeiten angehängt ist, wobei die Vorrichtung ein hydrostatisches Antriebs- oder Motorisierungssystem (6) des Sattelanhängers aufweist, das in der Lage ist, die mechanische Transmission zwischen einer Bewegungsaufnahme (3) der Zugmaschine und der zugehörigen Wagenachse (9) des Sattelanhängers sicherzustellen, wobei das hydrostatische System (6) mit einer hydraulischen Pumpe von veränderlicher Rate (13) und einem hydraulischen Motor (14) versehen ist, der durch die Pumpe (13) gespeist wird und mit einem auskuppelbaren Reduktionsgetriebe (7) verbunden ist, das an eine Brücke des Sattelanhängers gekuppelt ist, dadurch gekennzeichnet, daß sie aufweist a) einen Zusatzmotor (81) des Antriebs des Ausrüstungsgeräts (86), der mit einer Pumpe (83) und einem Hydraulikkreis (100) verbunden ist, b) Einrichtungen zur Betätigung des Antriebs für die Drehung des Ausrüstungsgeräts (86), entweder durch das hydrostatische Motosirierungssystem (6), wenn die Zugmaschine stillsteht, bei geringer oder hoher Drehgeschwindigkeit, und in die beiden Drehrichtungen, um die Funktionen "Mischen", "Leeren" und "Säubern" des Geräts (86) sicherzustellen, oder durch den Zusatzmotor (81), welcher von geringer Kraft ist und ausschließlich dem Antrieb des Ausrüstungsgeräts (86) bei geringer Geschwindigkeit in eine Drehrichtung vorgesehen ist, wenn die Zugmaschine sich bewegt oder wartet.

2. Vorrichtung nach Anspruch 1, dadurch gekennzeichnet, daß der Hydraulikkreis (100) einen Hydraulikmotor (84) für den Antrieb des Ausrüstungsgeräts aufweist, und unter Umgehung des hydrostatische Systems (6) angeordnet ist, wobei der Hydraulikmotor (84) entweder durch den Hydraulikkreis (100), der von dem hydrostatischen System (6) getrennt ist, wenn die Zugmaschine sich in Bewegung befindet oder wartet (Figur 2), oder durch das hydrostatische System (6) gespeist wird, wenn die Zugmaschine sich am Zielpunkt befindet oder fest angehalten hat (Figuren 3 bis 4), wobei die Einrichtungen vorgesehen sind um zeitweise den Zusatzmotor (81) von seiner Pumpe (83) zu trennen.

3. Vorrichtung nach Anspruch 1 oder 2, bei der das Ausrüstungsgerät ein Betonmischer (86) ist, dadurch gekennzeichnet, daß die Betätigungseinrichtungen für die Drehung des Betonmischers (86) durch das hydrostatische Motorisierungssystem (6) einen elektrischen Schaltkreis zur manuellen Bedienung durch den Fahrer aufweist, der mit einem Schalter (70) mit zwei Stellungen "MOT" und "AUX" versehen ist, wobei die erste Stellung den Antrieb des Sattelanhängers durch das hydrostatische System (6) sicherstellt und die zweite Position "AUX" die Übertragung der elektrischen Betätigung zu einem Relais (72) sicherstellt, welches in der Lage ist Verbindungsventile (75, 76) zwischen dem hydrostatischen Motorisierungssystem (6) und dem Hydraulikkreis (100) des Zusatzmotor (81) derart anzuregen, daß während die Ventile (75, 76) das hydrostatische System (6) vom Hydraulikkreis (100) des Zusatzmotors (81) trennen, wenn letzterer den Betonmischer (86) antreibt und der Schalter (70) in der Stellung "MOT" ist, die Ventile das hydrostatische System (6) und den Hydraulikkreis (100) des Zusatzmotors (81) verbinden, wenn der Schalter (70) in der Stellung "AUX" ist, die Pumpe (13) des hydrostatischen Systems (6) sodann den Antrieb eines Hydraulikmotors (84) des Zusatzkreises (100) und korrelierend die Drehung des Betonmischers (86) sicherstellt.

4. Vorrichtung nach Anspruch 3, dadurch gekennzeichnet, daß das Relais (72) in Betätigungsverbindung mit den Ventilen (75, 76) steht, die geeignet sind, daß hydrostatische System (6) und den hydraulischen Zusatzkreis (100) zu trennen oder zu verbinden, und mit einem dritten Ventil (73), das, in einer ersten Ruhestellung, die dem Antrieb des Betonmischers (86) durch den Zusatzmotor (81) und dem Antrieb bzw. der Motorisierung des Sattelanhängers entspricht, erlaubt, den Antriebsmotor (84) des Betonmischers aus einem Reservoir (90) zu speisen, und das in einer zweiten aktiven, von dem Relais (72) ausgelösten Stellung dem Reservoir (90) das von der Pumpe (83) herkommende hydraulische Fluid, die mit dem Zusatzmotor (81) verbunden ist, zurückschickt, wobei es letzteren inaktiv macht, während der Kreis (100) des Antriebsmotors (84) des Betonmischers (86) in Verbindung steht mit dem hydrostatischen Motorisierungssystem (6), wobei das dichte Reservoir (90) mit dem Hauptreservoir (43) verbunden ist, das ein gemeinsames für die Motorisierungskreise (6) und (100) des Zusatzmotors (81) ist.

5. Vorrichtung nach Anspruch 4, dadurch gekennzeichnet, daß der Schalter (70) mittels Abgreifern (103) mit einem Betätigungsorgan, wie einem Rheostat (77), verbunden ist, der mit dem Relais (72) und mit einem Abgreifer (103) durch Verbindungen (114, 115) verbunden ist, von denen eine verwendet wird für die erste Drehrichtung des Betonmischers (86) entsprechend einer ersten Zirkulationsrichtung des Fluids in dessen Antriebsmotor (84), und der andere Abgreifer verwendet wird für die zweite Drehrichtung des Betonmischers (86), wobei die Regelung manuell durch den Fahrer ausgeführt wird, und daß eines der Solenoiden des Elektroverteilers (E) der Pumpe (13) eine proportionale elektrische Information durch den Rheostat (77) empfängt, wenn der Schalter (70) in Position (AUX) ist, anstelle einer elektrischen Information "Alles oder Nichts" in Position (MOT) des Schalters.

6. Vorrichtung nach Anspruch 3, mit einem hydraulischen Sicherheitskreis (20), welcher an die Kanäle (15, 16) des hydrostatischen Systems (6) angeschlossen ist, wobei er die Verbindung zwischen der Pumpe (13) und dem Hydraulikmotor (14), der mit einem Umkehrgetriebe (60) versehen ist, welches durch das Schaltgetriebe (2) betätigbar ist, und angeordnet ist, um dem auf dem Sattelanhänger angeordneten Motor (14) zu erlauben, sich zu drehen und gespeist zu werden, wenn die Pumpe (13) sich nicht dreht oder noch nicht den notwendigen Hubraum erreicht hat, damit sich die Räder des Sattelanhängers mit der gleichen Geschwindigkeit drehen wie jene des Motors, dadurch gekennzeichnet, daß um dem hydraulischen Fluid zu erlauben, in dem hydrostatischen Motorisierungssystem (6) und in dem Kreis (100), der mit dem Zusatzmotor (81) verbunden ist, in der Rotationsrichtung des Betonmischers (86) zu zirkulieren, was dem Rückwärtsgang entspricht, während der Getriebehebel notwendigerweise sich im Totpunkt befindet, ein Relais (78) zwischen dem Betätigungsorgan (77) und dem Sicherheitskreis (20) vorgesehen ist, wobei das Relais (78) geeignet ist, dem Umkehrgetriebe (60) einen Befehl des Organs (77) zu übertragen, um das Umkehrgetriebe (60) in seine Position zu plazieren, die die Rückkehr des Fluids aus dem Kanal (15), der stromab des Hydraulikmotors (84) angeordnet ist, zum Kanal (16) stromauf im Fall des Gegendrucks in dem Kanal (15) stromab zu erlauben.

7. Vorrichtung nach einem der Ansprüche 3 bis 6, dadurch gekennzeichnet, daß zwischen dem Schalter (70) und dem Betätigungsorgan (77) ein Sicherheitstrennkreis (71) dazwischengeschaltet ist, der an den Schalthebel (12) derart angeschlossen ist, daß die von dem Schalter (70) herkommende elektrische Information, der in seine Position "AUX" gebracht ist, nur dann dem Betätigungsorgan (77) übertragen wird, wenn der Schalthebel (12) sich richtig im Totpunkt befindet, wobei das Fahrzeug sich im Stillstand befindet.

8. Vorrichtung nach einem der Ansprüche 1 bis 7, dadurch gekennzeichnet, daß sie einen Zusatzhydraulikkreis (132) aufweist, der durch Wegnahme von dem Reduktionsübertragungsgetriebe (7), welches mit dem Hydraulikmotor (14) des Motorisierungssystems gekoppelt ist, des durch diesen Motor entwickelten Moments, mittels einer Hydraulikpumpe (131), welche mit dem Reduktionsgetriebe (7) verbunden ist und geeignet ist, den Hydraulikkreis (132) anzutreiben, wenn die Zugmaschine sich bewegt mit dem Motorisierungsschaltkreis (6) in Funktion oder beim Stillstand, wobei beim Stillstand die Betätigung der Steuerung durch einen elektrischen Schaltkreis (135) sichergestellt ist, der mit dem Schalter, in dessen Stellung "AUX" verbunden ist, wobei die Steuerung des Zusatzhydraulikkreises (132) geeignet ist, beispielsweise durch Hydraulikzylinder, eine Bohrmaschine, eine Winde, eine Betonpumpe oder ein Entladeband zu betätigen.

9. Vorrichtung nach Anspruch 8, dadurch gekennzeichnet, daß sie Einrichtungen aufweisen, die erlauben den Zusatzkreis (132) abwechselnd mit dem hydraulischen Antriebskreis (100) des Ausrüstungsgeräts des Sattelanhängers zu betätigen.

## Claims

1. A hydraulic apparatus for driving at least one equipment apparatus, such as a concrete mixer (86) mounted on a semi-trailer hitched to a road and construction site traction vehicle, the apparatus comprising a hydrostatic system (6) which motorizes the semi-trailer and can ensure mechanical transmission between a power take-off (3) of the traction vehicle and the corresponding axle (9) of the semi-trailer, the hydrostatic system (6) having a hydraulic pump of variable flow rate (13) and a hydraulic motor (14) supplied by the pump (13) and connected to a disengageable step-down box (7) connected to an angle stay of the semi-trailer, characterized in that it comprises: a) an auxiliary motor (81) which drives the equipment apparatus (86) and is associated with a pump (83) and a hydraulic circuit (100); b) means for controlling the rotation of the equipment apparatus (86), either via the hydrostatic system (6) of motorization, when the traction vehicle is stationary, at low or high speed and in both directions of rotation to perform the "mixing", "emptying" and "cleaning" functions of said apparatus (86), or via the auxiliary motor (81), which is of low power and reserved solely for driving the equipment apparatus (86) at low speed in a single direction of rotation when the traction vehicle is moving or waiting.

2. An apparatus according to claim 1, characterized in that the hydraulic circuit (100) comprises a hydraulic motor (84) for driving the equipment apparatus and is mounted branched from the hydrostatic system (6), the hydraulic motor (84) being supplied either by the hydraulic circuit (100) isolated from the hydrostatic system (6) when the traction vehicle is moving or waiting (Fig. 2), or by the hydrostatic system (6) when the traction vehicle is stopped (Figs 3—4), means being provided for temporarily isolating the auxiliary motor (81) and its pump (83).

3. An apparatus according to claims 1 or 2, wherein the equipment apparatus is a concrete mixer (86), characterized in that the means for controlling the rotation of the concrete mixture (86) via the hydrostatic system of motorization (6) comprise an electric circuit which is manually controlled by the driver and which has a switch (70) having two positions "MOT" and "AUX", the first position motorizing the semi-trailer via the hydrostatic system (6) and the second position "AUX" ensuring the transmission of the electrical signal to a relay (72) able to trigger connecting valves (75, 76) between the hydrostatic motorization system (6) and the hydraulic circuit (100) of the auxiliary motor (81) so that, while the valves (75, 76) isolate the hydrostatic system (6) from the hydraulic system (100) of the auxiliary motor (81) when the latter drives the concrete mixer (86) and the switch (70) is in the "MOT" position, said valves put the hydrostatic system (6) and the hydraulic circuit (100) of the auxiliary motor (81) into communication when the switch (70) is in the "AUX" position, the pump (13) of the hydrostatic system (6) then ensuring the driving of a hydraulic motor (84) of the auxiliary circuit (100) and correlatively the rotation of the concrete mixer (86).

4. An apparatus according to claim 3, characterized in that the relay (72) is in control connection with the two valves (75, 76) adapted to isolate or put into communication the hydrostatic system (6) and the auxiliary hydraulic circuit (100), a third valve (73) being provided which, in a first inoperative position corresponding to the concrete mixer (86) being driven by the auxiliary motor (81) and the motorization of the semi-trailer, enables the motor (84) driving the concrete mixer to be supplied from a reservoir (90), and in its second active position triggered by the relay (72) returns to the reservoir (90) the hydraulic fluid coming from the pump (83) associated with the auxiliary motor (81), thus rendering the latter inoperative while the circuit (100) of the motor (84) driving the concrete mixer (86) is in communication with the hydrostatic motorization system (6), the hermetic reservoir (90) being connected to the main reservoir (43) which is shared by the motorization circuit (6) and the circuit (100) of the auxiliary motor (81).

5. An apparatus according to claim 4, characterized in that the switch (70) is connected via taps to a control member such as a rheostat (77), connected to the relay (72) and to a tap (103) via connections (114, 115), one of which is used for the first direction of rotation of the concrete mixer (86), corresponding to a first direction of flow of fluid in the motor (84) driving the concrete mixer (86), the other tap being used for the second direction of rotation of the concrete mixer (86), such control being performed manually by the driver, one of the solenoids of the electric distributor (E) of the pump (13) receiving a proportional electric signal via the rheostat (77) when the switch (70) is in the "AUX" position, instead of an "on or off" electric signal in the "MOT" position of the switch.

6. An apparatus according to claim 3, comprising a hydraulic safety circuit (20) connected to the ducts (15, 16) of the hydrostatic system (6), ensuring the connection between the pump (13) and the hydraulic motor (14) and having an inverter (60) which can be controlled by the gear box (2) and is adapted to enable the motor (14) mounted on the semi-trailer to rotate and be supplied when the pump (13) is not rotating or does not yet have the capacity required for the wheels of the semi-trailer to rotate at the same speed as that of the motor, characterized in that to enable the hydraulic fluid to flow in the hydrostatic motorization system (6) and in the circuit (100) associated with the auxiliary motor (81) in the direction of rotation of the concrete mixer (86) corresponding to reverse travel, while the gear lever is necessarily in neutral, a relay (78) is provided between the control member (77) and the safety circuit (20), such relay (78) being adapted to transmit to the inverter an order from the member (77) to move the inverter (60) into its position enabling the fluid to return from the duct (15) disposed downstream of the hydraulic motor (84) to the upstream duct (16) if there is a counterpressure in the downstream duct (15).

7. An apparatus according to any of claims 3 to 6, characterized in that interposed between the switch (70) and the control member (77) is a safety circuit breaker (71) so connected to the gear lever (12) that the electrical information coming from the switch (70) moved into the "AUX" position is transmitted to the control member (77) only if the gear lever (12) is definitely in neutral, the vehicle being stationary.

8. An apparatus according to any of claims 1 to 7, characterized in that it comprises a supplementary hydraulic circuit (132) controlled by the picking up, at the step-down power divider (7) connected to the hydraulic motor (14) of the motorization system, of the torque developed by such motor, by means of a hydraulic pump (131) connected to the step-down power divider (7) and adapted to drive the hydraulic circuit (132) when the traction vehicle is operating with the motorization circuit (6) operating or stopped, the operation of such control being ensured on stoppage by an electric circuit (135) connected to the switch (70) placed in the "AUX" position, the control of the supplementary hydraulic circuit (132) being adapted to control, for example, hydraulic jacks, a drilling machine, a winch, a concrete pump or an unloading belt conveyor.

9. An apparatus according to claim 8, characterized in that it comprises means enabling the supplementary circuit (132) to be supplied alternately with the hydraulic circuit (100) driving the equipment apparatus of the semi-trailer.

*Fig:1A*

**EP 0 102 266 B1**

Fig: 1 B

2

Fig:2

Fig:3

Fig:4

EP 0 102 266 B1

*Fig:5*

EP 0 102 266 B1

Fig: 6

EP 0 102 266 B1